(19) **Europäisches Patentamt**
**European Patent Office**
**Office européen des brevets**

(11) **EP 4 635 834 A1**

(12) **EUROPÄISCHE PATENTANMELDUNG**

(43) Veröffentlichungstag:
22.10.2025 Patentblatt 2025/43

(21) Anmeldenummer: 25170239.5

(22) Anmeldetag: 13.04.2025

(51) Internationale Patentklassifikation (IPC):
*B62J 45/411* (2020.01)     *B60L 50/20* (2019.01)
*B62K 27/00* (2006.01)      *B62M 6/50* (2010.01)

(52) Gemeinsame Patentklassifikation (CPC):
**B62M 6/50; B60L 50/20; B62J 45/411;**
**B62K 27/003;** B60L 15/20; B60L 2200/12;
B60L 2240/12; B60L 2240/14; B60L 2240/26;
B60L 2240/423; B60L 2240/642; B62J 45/4152

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: 18.04.2024 DE 102024001250

(27) Früher eingereichte Anmeldung:
18.04.2024 DE 102024001250

(71) Anmelder:
• **Bergmann, Lukas**
**8050 Zürich (CH)**

• **Bergmann, Sophie**
**8050 Zürich (CH)**

(72) Erfinder:
• **Bergmann, Lukas**
**8050 Zürich (CH)**
• **Bergmann, Sophie**
**8050 Zürich (CH)**

(54) **MODELLBASIERTE KRAFTSCHÄTZUNGSVORRICHTUNG FÜR EIN MOTORISIERTES GEFÄHRT**

(57) Die Erfindung beschreibt eine Kraftschätzungsvorrichtung für ein motorisiertes Gefährt, das ein Unterstützungs-Drehmomente in Abhängigkeit einer externen Kraft erzeugt. Die externe Kraft wird dabei direkt oder indirekt durch eine Nutzerin oder einen Nutzer erzeugt und schiebend oder ziehend auf das Gefährt eingebracht. Zur Schätzung dieser externen Kraft wird eine modellbasierte Zustandsschätzung verwendet, die auf Basis der Modellparameter, und Systemeingänge (Neigungswinkel, Motorstrom) zunächst die Zustände des Systems für den nächsten diskreten Zeitpunkt prädiziert und in einem zweiten Schritt diese Prädiktion auf Basis der Geschwindigkeits- und/oder Beschleunigungsmessung korrigiert. Dieses Verfahren zur modellbasierten Kraftschätzung ermöglicht eine rauschärmere und präzisere Schätzung als herkömmliche Verfahren, die eine inverse Transferfunktion verwenden.

Fig. 1

## Beschreibung

### Technisches Feld

Die vorliegende Erfindung betrifft eine Kraftunterstützungsvorrichtung, die dazu bestimmt ist, eine Person beim Schieben oder Ziehen eines Gefährts mit Hilfe eines Elektromotors zu unterstützen. Darüber hinaus bezieht sich die Erfindung auf ein elektrisch unterstütztes Gefährt, das die vorgenannte Hilfsvorrichtung enthält. Das elektrifizierte Gefährt wird weiterhin dadurch charakterisiert, dass es durch eine von einer Person ausgeübte ziehende oder drückende Kraft in Bewegung gesetzt wird. Beispiele für solche Gefährte sind motorisierte (Kinder-) Wagen, (Fahrrad-) Anhänger, Rollatoren, Schubkarren, Skateboards oder Sackkarren.

### Stand der Technik

Kraftunterstützende Fahrzeuge, bei denen der Fahrer des Fahrzeugs durch einen Elektromotor unterstützt wird, gewinnen immer mehr an Bedeutung. Insbesondere im Bereich der persönlichen Mobilität ist dieser Trend deutlich sichtbar. Ein bekanntes Beispiel für kraftunterstützende Fortbewegungsmittel sind elektrisch unterstütze Fahrräder (E-Bikes), die ein auf die Tretkurbel ausgeübtes Drehmoment messen und durch einen Elektromotor verstärken bzw. unterstützen. Die Entwicklung von E-Bikes hat bisher viel Berücksichtigung gefunden. Das kraftunterstützende Konzept ist jedoch auch auf andere, weniger konventionelle Gefährte übertragbar. Im Folgenden sollen daher kraftunterstützende Fahrzeuge betrachtet werden, die durch eine ziehende oder schiebende Kraft in Bewegung gesetzt werden. Dazu gehören insbesondere (Kinder-) Wagen, (Fahrrad-) Anhänger, Rollatoren, Scooter, Skateboards, Schubkarren oder Sackkarren bei denen ein elektrischer Motor die von der Nutzerin oder dem Nutzer auf das Gefährt gegebene Kraft unterstützt, um die Beförderung von Personen oder Ladung zu vereinfachen. Um die vom Menschen auf das Gefährt eingebrachte Kraft elektrisch unterstützen zu können, muss diese jedoch zunächst quantifiziert werden.

Bei E-Bikes geschieht die Messung des Antriebsdrehmoments konventionell mit Hilfe von Drehmomentsensoren in der Tretkurbel (WO2015055673A1). Neuere Erfindungen adressieren das Problem der Drehmomentquantifizierung bei E-Bikes mit Hilfe von modellbasierten Verfahren (US2006095191A1, EP3782895B1, US10625818B2). Dabei wird zunächst ein dynamisches Modell des Fahrrads hergeleitet und anschließend mit Hilfe von Geschwindigkeits- und Straßenneigungsmessungen das für die gemessene Geschwindigkeit und Geschwindigkeitsänderung ursächliche Gesamtdrehmoment berechnet. Unter Berücksichtigung des gemessenen Motordrehmoments auf Basis des gemessenen Motorstroms kann anschließend ein Drehmoment bestimmt werden, das dem vom Menschen aufgebrachten Drehmoment zugeordnet werden kann. Dieser allgemeine, modellbasierte Ansatz wird im folgenden auch als virtueller Drehmomentsensor bezeichnet.

Bei der externen Kraftschätzung von anderen motorisierten Fahrzeugen, wie zum Beispiel Anhängern, gibt es ebenfalls Lösungsansätze, um die Antriebskraft zu ermitteln. Analog zum Drehmomentsensor im Tretlager des Fahrrads können bei einem gezogenen oder geschobenen Fahrzeug Kraftsensoren in der Deichsel (WO2021150160A1) oder im Handgriff verwendet werden. Andere Ansätze nutzen elastische Elemente in der Aufhängung oder der Deichsel, um über die Messung der Deformation des elastischen Elements auf die externe Kraft zurückschließen zu können (WO2017144832A1). Zuletzt ist auch die Entkopplung zwischen einem ziehenden Fahrzeug und einem Anhänger möglich, um ein Folgen des Anhängers ohne Kraftübertragung auf das ziehende Fahrzeug zu ermöglichen (WO2017140626A1).

Die Berücksichtigung von virtuellen Kraftsensoren, also einer modellbasierten Schätzung der externen Kraft bei Gefährten, die gezogen oder geschoben werden, wird in US10625818B2 und JP6324335B2 beschrieben.

Das in US10625818B2 beschriebene Verfahren basiert auf einer Transferfunktion, die das dynamische Verhalten des Fahrzeugs beschreibt. Die Transferfunktion berücksichtigt die Massenträgheit des Fahrzeugs und der Ladung, die Haft- und Gleitreibung, den Luftwiderstand und die Gravitationskräfte resultierend aus der Neigung der Straße. Durch das Bilden der inversen Transferfunktion wird die Gesamtkraft berechnen, mit der das Fahrzeug angetrieben wurde und unter Berücksichtigung des Motorstroms auch der Anteil der externen Kraft. Für die Kraftmessung wird lediglich ein Geschwindigkeitssensor (z.B. mittels Hall-Sensorik im Rad) und ein Beschleunigungssensor (zur Messung der Straßenneigung) benötigt. Weiterhin beschreibt das Patent US10625818B2 eine Parameteridentifikation basierend auf einem sequentiellen Algorithmus der kleinsten Fehlerquadrate. Die Parameteridentifikation soll es ermöglichen das zeit-variante Verhalten des Systems, z.B. bei einer sich ändernden Gepäcklast, in der Transferfunktion zu berücksichtigen.

Der in JP6324335B2 beschriebene Ansatz verzichtet zusätzlich auf die Verwendung eines Geschwindigkeitssensors und verwendet stattdessen einen Geschwindigkeitsbeobachter zur Schätzung der Motorrotationsgeschwindigkeit auf Basis der Motorspannung und des Motorstroms. Anschließend wird die geschätzte Winkelgeschwindigkeit an einen Störungsbeobachter weitergegeben, der die gesamte externe Kraft (Störung) schätzt. Der Störungsbeobachter besteht aus einer inversen Funktion des dynamischen Verhaltens des Fahrzeugs, ähnlich der inversen Übertragungsfunktion in US10625818B2. Nach der Schätzung der externen Kraft wird eine Admittanzregelung implementiert, die eine Referenzgeschwindigkeit für einen PID-Geschwindigkeitsregler liefert, der die Motorspannung so einstellt, dass die gewünschte Zielgeschwindigkeit erreicht wird. Die Admittanzsteuerung soll die benötigte Belastung auf die bedienende Person des Fahrzeugs möglichst konstant halten. Hierzu wird die Last zur Fortbewegung des Gefährts in Form einer virtuellen Masse und eines virtuellen Dämpfungsfaktors definiert.

**Nachteile**

Die Implementierung konventioneller, physikalischer Kraft- und Drehmomentsensoren erhöht die Komplexität des Systems, was zu höheren Kosten führt. Die Sensoren erfordern ein aufwendigeres Hardware-Setup, was sowohl den Herstellungsprozess als auch die Installation verteuert. Die notwendige, regelmäßige Wartung und mögliche Reparaturen können zu zusätzlichen Kosten führen.

Ein weiterer Nachteil ist die begrenzte Anpassungsfähigkeit konventioneller Sensoren. Vor allem bei Fahrzeugen, die geschoben oder gezogen werden, erlauben Kraftsensoren lediglich die Messung der Krafteinwirkung auf das Gefährt an nur einer Stelle (z.B. entweder an der Deichsel oder dem Handgriff). Dies verhindert Modifikationen in der Nutzungsweise, wenn z.B. ein Hänger nicht mehr gezogen, sondern geschoben werden soll. In einem solchen Fall müsste ein zweiter Sensor verwendet werden, um die Krafteinwirkung an gewünschter Stelle messen zu können, was wiederum die Komplexität des Systems erhöht.

Modellbasierte Kraftschätzungen bzw. virtuelle Kraftsensoren sind hingegen kostengünstig und detektieren externe Krafteinwirkungen unabhängig vom Angriffspunkt (ziehen oder schieben).

Die für kraftunterstützende Gefährte (nicht E-Bikes) beschriebenen virtuellen Kraftsensoren weisen jedoch einige Nachteile auf.

Beide zuvor genannten Ansätze basieren auf der Verwendung einer inversen Transferfunktion. In der in US10625818B2 angegebenen Umsetzung führt die Verwendung dieser inversen Funktion zu einer verrauschten Kraftschätzung. Grund dafür ist, dass innerhalb der inversen Transferfunktion die zweite Ableitung der Motorposition auf Basis der Hall-Sensorik des Motors bestimmt werden muss. Da die Hall-Sensoren lediglich eine quantisierte, diskrete Messung der Rotorposition liefern ist die zweite Ableitung (auch bei hoher Polzahl und Getriebeübersetzung) und damit auch die berechnete externe Kraft sehr verrauscht. Um das geschätzte Kraftsignal für die Regelung des Motors nutzen zu können, müsste dies durch einen Tiefpassfilter mit niedriger Grenzfrequenz gefiltert werden, was zu einer deutlichen Verzögerung der Unterstützung führt. Der in JP6324335B2 angegebene Ansatz umgeht dieses Problem durch die Schätzung der Geschwindigkeit mit einem Beobachter. Dieser Ansatz ist jedoch ungenauer, da die Information der Hall-Sensoren, die in den meisten Motoren ohnehin zur Verfügung stehen, nicht berücksichtigt wird.

Einer der wichtigsten Aspekte, um die extern eingebrachte Kraft zuverlässig schätzen zu können, ist die zuverlässige Ermittlung der Straßenneigung auch unter hohen Horizontalbeschleunigungen des Gefährts. In US10625818B2 wird ein Neigungswinkelsensor auf Basis eines Beschleunigungssensors vorgeschlagen. Die alleinige Verwendung von Beschleunigungssensoren zur Neigungswinkelschätzung führt jedoch zu Schätzungsfehlern unter der Präsenz von Beschleunigungen in Fahrtrichtung. In EP3782895B1 wird daher ein Verfahren vorgeschlagen, dass die Messwerte eines Beschleunigungssensors und eines Drehratensensor in Abhängigkeit der durch Hall-Sensoren ermittelten Fahrzeugbeschleunigung gewichtet. Letzteres Patent beschränkt sich lediglich auf die Schätzung des Antriebsdrehmoments bei einem E-Bike.

**Aufgabe**

Für die Regelung elektrisch unterstützender Gefährte, die durch eine externe Kraft gezogen oder geschoben werden, wird eine Quantifizierung der externen Kraft benötigt. Aus wirtschaftlichen und praktikablen Gründen soll die Quantifizierung ohne zusätzliche Kraftsensorik erfolgen. Die Herausforderung besteht darin, die externe Kraft möglichst schnell und rauschfrei zu schätzen, um eine direkte und nahtlose Unterstützung dieser Kraft durch den elektrischen Motor des Gefährts zu ermöglichen.

**Lösung**

Die Aufgabe wird durch ein motorisiertes Gefährt mit den Merkmalen des Hauptanspruchs gelöst. Das Gefährt zeichnet sich dadurch aus, dass es durch eine externe Kraft geschoben oder gezogen wird. Darüber hinaus weist das Gefährt mindestens einen elektrischen Antrieb auf. Der elektrische Antrieb kann als Radnabenmotor oder als Motor mit mechanischer Kopplung an ein Rad realisiert werden.

Der elektrische Antrieb wird so angesteuert, dass ein von der externen Kraft abhängiges Unterstützungsdrehmoment aufgebracht wird. Dabei kann der Nutzer den Grad der Unterstützung durch eine Betätigung der Bedieneinheit selbstständig auswählen.

Gemäß der Erfindung weist der elektrische Antrieb eine Berechnungseinheit zum Abschätzen der externen Kraft auf, wobei in der Berechnungseinheit ein Berechnungsmodell in Form der Fahrdynamik des Gefährts hinterlegt ist. Die Berechnungseinheit berücksichtigt in ihrem Berechnungsmodell neben der Geschwindigkeit und der Beschleunigung des Gefährts und des durch den Elektromotor erzeugten Motordrehmoments auch die Nickneigung des Gefährts. Durch die Berücksichtigung der Nickneigung des Gefährts wird unter anderem der Fahrwiderstand aufgrund einer der Nickneigung entsprechenden Fahrbahnneigung, beispielsweise bei einem Berganstieg, in dem Berechnungsmodell berücksichtigt.

Weiterhin zeichnet sich die Berechnungseinheit dadurch aus, dass sie die externe Kraft mithilfe einer Zustandsschätzung, wie z.B. einem erweiterten oder einem 'unscented' Kalman Filter, bestimmt. Der Zustandsschätzung liegen das Modell der Fahrdynamik des Gefährts sowie die Modellparameter und die Sensormesswerte zugrunde. Aus Basis des nichtlinearen Modells in Kombination mit den Modellparametern, dem gemessenen Motorstrom, der gemessenen Geschwindigkeit (und Beschleunigung) und der gemessenen Straßenneigung werden - gemäß nach dem Prinzip der Zustandsschätzung - die inneren Zustände geschätzt und darüber die auf das Gefährt extern eingebrachte Kraft abgeleitet. Dies ist möglich, indem die extern eingebrachte Kraft im Modell nicht als Systemeingang, sondern als zusätzlicher, innerer Systemzustand betrachtet wird.

Die Messung der Straßenneigung soll vorzugsweise durch einen 3D-Beschleunigungssensor in Kombination mit einem Drehratensensor erfolgen. Der 3D-Beschleunigungssensor ist - bei konstanter Geschwindigkeit - in der Lage, die Erdbeschleunigung zu messen und somit die Ausrichtung des Sensors und damit des Gefährts zu bestimmen. Bei einer (positiven oder negativen) Beschleunigung des Gefährts würde die Schätzung jedoch vom tatsächlichen Nickwinkel abweichen. In diesem Fall weicht jedoch auch die geometrische Länge des dreidimensionalen Beschleunigungsvektors von der Länge des Erdbeschleunigungsvektors ab, weshalb in diesem Fall zusätzlich der Drehratensensor verwendet werden kann, um die Schätzung des Nickwinkels zu korrigieren.

Vorzugsweise ist die Berechnungseinheit eingerichtet, die externe Kraft basierend auf einer Gesamtmasse des Gefährts abzuschätzen, wobei die Gesamtmasse die Fahrzeugmasse und die Zuladung umfasst. Die Gesamtmasse kann vorzugsweise mittels eines Gewichtssensors, mittels einer Eingabeinformation und/oder mittels eines vorgegebenen konstanten Werts bestimmt werden. Vorzugsweise ist zur Bestimmung der Fahrermasse ein Gewichtssensor vorgesehen, welcher in der Radaufhängung des Gefährts implementiert ist. Für eine weitere vorzugsweise Ausführung zur Bestimmung der Gesamtmasse ohne die Verwendung eines zusätzlichen Sensors ist eine Parameteridentifikation während des Betriebs vorgesehen. Insbesondere bei starken Anstiegen hat eine veränderte Masse einen hohen Einfluss auf das Modellverhalten. Diese Tatsache soll vorzugsweise genutzt werden, um den Modellparameter der Masse so anzupassen, dass der quadratische Fehler zwischen Modell und Prozess minimiert wird.

In einer bevorzugten Konfiguration ist die Berechnungseinheit so ausgelegt, dass sie die von außen einwirkende Kraft anhand von Luftwiderstandsdaten schätzt. Diese Luftwiderstandsdaten umfassen den Widerstand, der sich aus der Geschwindigkeit des Fahrzeugs ergibt, sowie einen eventuellen Wind bedingten Widerstand. Der durch die Geschwindigkeit des Gefährts bedingte Widerstand, insbesondere der Windwiderstand, trägt wesentlich zum Gesamtwiderstand bei. Die Einbeziehung dieser Luftwiderstandsdaten im Berechnungsmodell trägt dazu bei, die Diskrepanzen zwischen der vorhergesagten externen Kraft und der tatsächlichen externen Kraft zu minimieren.

Vorzugsweise soll bei schiebenden Gefährten detektiert werden, ob dieses parallel zur Straße ausgerichtet ist oder ob es durch äußere Einwirkung gekippt wird - wie es häufig bei Kinderwagen der Fall ist. Dies ist notwendig, um festzustellen, ob der Nickwinkel des Gefährts der Straßenneigung entspricht. Vorzugsweise kann diese Detektion durch Sensorik im Handgriff oder durch die Auswertung des Messverlaufs der Drehraten-, Beschleunigungs- und Geschwindigkeitssensorik erfolgen.

Die Erfindung erschafft somit ein elektrifiziertes Gefährt, bei dem die schiebende oder ziehende externe Kraft, ausgeübt durch einen Nutzer oder eine Nutzerin, mit hoher Genauigkeit geschätzt und folglich auch unterstützt werden kann.

**Vorteile**

Die Verwendung einer modellbasierten Methode zur Ermittlung der extern aufgebrachten Kraft bietet verschiedene Vorteile. Zum einen wird keine zusätzliche Hardware in Form eines Kraftsensors benötigt. Desweiteren wird eine externe Kraft detektiert unabhängig davon ob das Gefährt gezogen oder geschoben wird. Die explizite Verwendung einer Zustandsschätzung bietet darüberhinaus den Vorteil, dass unterschiedliche Sensormodalitäten ohne weiteres miteinander fusioniert werden können. So kann z.B. eine direkte Messung der Vorwärtsbeschleunigung mit Hilfe eines Beschleunigungssensors berücksichtigt werden. Jedoch funktioniert die Kraftschätzung auch ohne eine Messung der Beschleunigung und nur auf Basis der Hall-Sensor Messung, da die Beschleunigung einen inneren Zustand des Systems darstellt und aus der Geschwindigkeit abgeleitet werden kann. Des Weiteren erlaubt die Zustandsschätzung in Abhängigkeit der Wahl der Kovarianzmatrizen eine automatische Tiefpassfilterung des geschätzten Signals. Durch die passende Wahl der Kovarianzmatrizen kann ein guter Kompromiss zwischen Schätzgeschwindigkeit und Rauschunterdrückung gefunden werden.

## Aufzählung der Figuren

Die Erfindung wird anhand eines Ausführungsbeispiels, welches in den Zeichnungen dargestellt ist, näher erläutert. Es zeigt:

Fig. 1: Fahrradanhänger mit Elektroantrieb
Fig. 2: Modell des Gefährts und Zustandsschätzung

Die Nummerierungslegende ist wie folgt:

| | | | | | |
|---|---|---|---|---|---|
| 10: | Gefährt | 30: | Modell | 44: | Systemzustand Beschleunigung |
| 11: | Räder | 31: | Antriebskraft | 45: | Diskreter Zeitpunkt |
| 12: | Motor | 32: | Strom | 46: | Messmodell |
| 13: | Deichsel | 33: | Nickwinkel | 47: | Ausgang des Messmodells |
| 14: | Handgriff | 34: | Luftwiderstand erzeugt | 48: | Zweiter Ausgang des Messmodells |
| 15: | Berechnungseinheit durch Wind | | | 49: | Vektor aller Messmodellausgänge |
| 16: | Messeinheit | 35: | Geschwindigkeit | 50: | Vergleich der prädizierten Sensorwerte mit den gemessenen Sensorwerten |
| 17: | Batterie | 36: | Beschleunigung | | |
| 20: | Fahrrad | 37: | Sensorwerte | 51: | Korrekturfaktor |
| 21: | Kupplung | 40: | Zustandsschätzung | 52: | Korrigierte Systemzustände |
| | | 41: | Eingänge | 53: | Umrechnung von Beschleunigung in Kraft |
| | | 42: | Prädiktionsmodell | 54: | Geschätzte externe Kraft |
| | | 43: | Systemzustand Geschwindigkeit | | |

## Ausführung der Erfindung

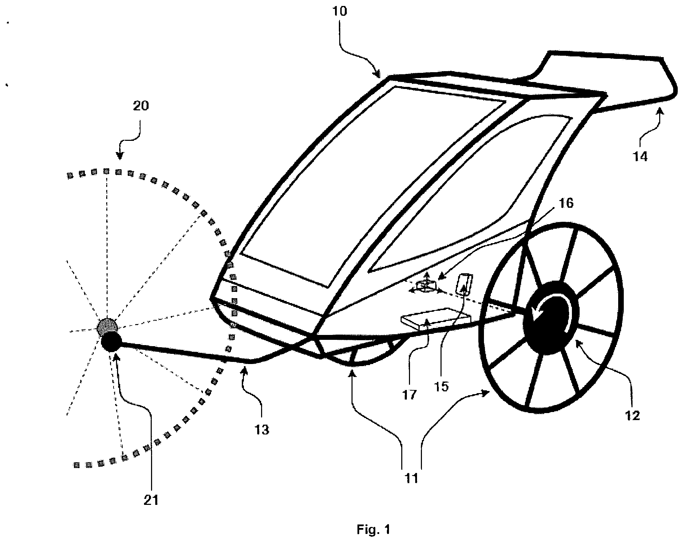

Die Figur 1 zeigt ein motorisiertes Gefährt (10). Das Gefährt kann entweder über eine Deichsel (13) gezogen oder über einen Handgriff (14) geschoben werden. Durch eine Kupplung (21) kann das Gefährt auch an ein weiteres Gefährt gekoppelt werden, sodass die ziehende Kraft nicht notwendigerweise direkt durch einen Menschen ausgeübt wird sondern indirekt über das Hinterrad eines anderen Gefährts ,z.B. ein Fahrrad (20), auf das motorisierte Gefährt übertragen wird.

Das Gefährt weist zur elektromotorischen Unterstützung mindestens einen elektrischen Antrieb (12) auf, der die Räder (11) (oder das Rad) des Gefährts antreiben kann. Der elektrische Antrieb kann zudem eine Geschwindigkeits-Kraftübersetzung in Form eines Getriebes aufweisen. Die Motoren werden durch eine Batterie (17) mit elektrischer Energie versorgt.

Die für die Ansteuerung des Elektromotors bzw. der Elektromotoren erforderliche externe Kraft wird über eine am Fahrzeug angebrachte Berechnungseinheit (15) abgeschätzt. Für die Abschätzung der externen Kraft wird weiterhin eine Messeinheit (16) zur Messung des Nickwinkels des Gefährts und damit indirekt zur Messung der Straßenneigung benötigt. Diese Messeinheit kann z.B. eine Trägheitsmesseinheit (IMU) sein, die eine 3D Beschleunigungs- und Rotationsmessung ermöglicht.

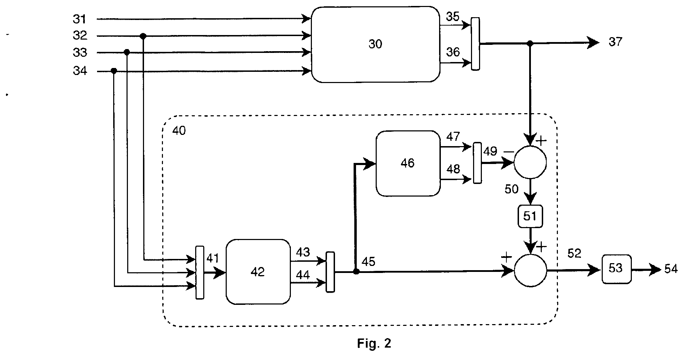

Ein Blockdiagramm zur Schätzung der externen Kraft ist in Figur 2 gezeigt und wird im Folgenden näher erläutert.

Damit die Berechnungseinheit (15) die externe Kraft abschätzen kann, wird zunächst ein Modell (30) benötigt, das die Fahrdynamik des motorisierten Gefährts beschreibt. Ein mögliches Modell ist gegeben durch die folgende Gleichung:

$$a(t) = \frac{1}{m_{tot} + \frac{J_W}{r_W^2}} \cdot \left( F_{ext} + I_M \frac{k_\tau \gamma c_M}{r_W} \right) -$$

$$\frac{1}{m_{tot} + \frac{J_W}{r_W^2}} \cdot \left( m_{tot} g (\sin(\theta) + \mu |\cos(\theta)|) + \beta_0 \frac{v(t)}{|v(t)|} + \beta_1 v(t) + \frac{1}{2} c_d \rho A \, v(t)^2 + F_{Wind} \right)$$

Hierbei werden die messbaren Modellausgänge durch die Geschwindigkeit v(t) (35) und die Beschleunigung

$a(t) = \frac{dv}{dt}$ (36) des Gefährts (10) beschrieben. Weiterhin charakterisiert $m_{tot}$ die Gesamtmasse des Gefährts (10) inklusive der Zuladung, $J_W$ die Rotationsträgheit der Räder (11), $r_W$ den Radius der Räder (11) und $g$ die Erdbeschleunigung. Der Rollreibungswiderstand der Räder (11) wird durch $\mu$ berücksichtigt, wohingegen die Gleitreibung und Haftreibung der Lager des Antriebsstrangs durch $\beta_1$ und $\beta_0$ berücksichtigt werden. Der Luftwiderstand wird mithilfe der Luftdichte $p$, dem aerodynamischen Widerstandskoeffizienten $c_d$ und der frontalen Fläche A des Gefährts bestimmt. Des Weiteren verfügt das Modell über vier Eingänge:

1. Die externe Antriebskraft $F_{ext}$ (31).
2. Den Strom $I_M$ (32) des Motors (12). Über diesen kann die erzeugte Antriebskraft unter Berücksichtigung der Motorkonstante $k_\tau$, der Getriebeübersetzung y, dem Effizienzkoeffizienten des Motors $c_M$ und dem Reifenradius $r_W$ bestimmt werden.
3. Den Nickwinkel $\theta$ (33) des Gefährts und damit den Steigungswinkel der Straße.
4. Der Luftwiderstand erzeugt durch Wind $F_{Wind}$ (34), der auf das Gefährt einwirkt.

Um den Motorstrom (32) und damit die Antriebskraft richtig zu justieren, wird eine Schätzung der externen Kraft $F_{ext}$ gemäß dem Hauptanspruchs der Erfindung benötigt.

Eine Zustandsschätzung (40), z.B. ein (erweiterter oder unscented) Kalman Filter, verwendet in einem ersten Schritt die Zustandsinformationen $\underline{x}_{k-1}$ (der Unterstrich kennzeichnet einen Vektor) eines Systems zum diskreten Zeitpunkt k-1 in Kombination mit einem Prädiktionsmodell (42) und seinen Eingängen $\underline{u}_k$ (41), um eine Vorhersage über den Zustand zum Zeitpunkt k (45) zu geben. In einem zweiten Schritt werden mithilfe eines Messmodells (46) die gemessene Systemvariablen $\underline{z}_k$ auf Basis der prädizierten Systemzustände berechnet. Diese hypothetischen Messwerte werden anschließend mit den tatsächlichen Sensorwerten (37) verglichen (50) und über einen Korrekturfaktor (51) zur Korrektur der prädizierten Zustände genutzt. Das Ergebnis ist die durch Messwerte korrigierte Schätzung der inneren Systemzustände (52) zum aktuellen Zeitpunkt k. Es wird davon ausgegangen, dass sowohl die gemessenen Werte als auch die vom Modell vorhergesagten Zustandswerte einem multivariaten, mittelwertfreien Gaußschen Rauschen ($\underline{\lambda}_k$ bzw. $\underline{\kappa}_k$) unterliegen.

Um im vorliegenden Beispiel die externe Kraft $F_{ext}$ durch eine solche Zustandsschätzung ermitteln zu können, wird die oben beschriebene Modellgleichung zunächst in ein diskretes System der Form

$$\underline{x}_k = \underline{f}(\underline{x}_{k-1}, \underline{u}_k) + \underline{\kappa}_k$$

$$\underline{z}_k = \underline{h}(\underline{x}_k) + \underline{\lambda}_k$$

überführt werden. Zudem wird die zuvor als Eingang betrachtete externe Kraft $F_{ext}$ (31) in einen inneren Zustand des Systems umgewandelt, da Zustandsschätzungen nicht in der Lage sind Systemeingänge zu schätzen. Letzteres wird realisiert, indem ein weiterer, innerer Zustand definiert wird dessen Eingang aus mittelwertfreiem, weißen Rauschen besteht. Dieser zusätzliche Zustand stellt die durch die externe Kraft verursachte Beschleunigung $a_{ext}$ dar. Die um einen zweiten Zustand erweiterten diskreten Systemgleichungen ergeben sich demnach zu:

$$x_{1,k} = v_k = v_{k-1} + \Delta t \cdot \left( \frac{1}{m_{tot} + \frac{J_W}{r_W{}^2}} I_M \frac{k_\tau \gamma c_M}{r_W} + a_{ext,k-1} \right) + \kappa_{1,k} -$$

$$\Delta t \cdot \frac{1}{m_{tot} + \frac{J_W}{r_W{}^2}} \cdot \left( m_{tot} g(\sin(\theta) + \mu |\cos(\theta)|) + \beta_0 \frac{v_{k-1}}{|v_{k-1}|} + \beta_1 v_{k-1} + \frac{1}{2} c_d \rho A v_{k-1}{}^2 + F_{Wind} \right)$$

$$x_{2,k} = a_{ext,k} = a_{ext,k-1} + \Delta t \cdot \kappa_{2,k}$$

Diese beiden Gleichungen werden in der Zustandsschätzung genutzt, um aus Basis der Zustände zum Zeitpunkt k-1 und der Eingänge des Systems (Motorstrom, Nickwinkel) eine Vorhersage der beiden Zustände $x_{1,k} = v_k$ (43) und $x_{2,k} = a_k$ (44) für den Zeitpunkt k zu machen.

Für die Korrektur der Schätzung auf Basis von Messsignalen wird im zweiten Schritt das Messmodell (46) des Systems benötigt. Die Geschwindigkeit v des Gefährts stellt den ersten Ausgang des Messmodells (47) dar. Die Ausgangsfunktion wird beschrieben durch:

$$z_{1,k} = v_k + \lambda_{1.k}$$

Lässt sich zusätzlich auch die Beschleunigung des Gefährts, z.B. durch einen Beschleunigungssensor oder die Differentiation der Geschwindigkeit, messen, kann diese als zweiter Ausgang des Messmodells (48) genutzt werden, um die Zustandsschätzung im nächsten Schritt zu korrigieren. Die entsprechende Ausgangsfunktion ist:

$$z_{2.k} = a_k = a_{ext,k-1} + \frac{1}{m_{tot} + \frac{J_W}{r_W^2}} I_M \frac{k_\tau \gamma c_M}{r_W} -$$

$$\frac{1}{m_{tot} + \frac{J_W}{r_W^2}} \left( m_{tot}\, g(sin(\theta) + \mu\, |cos(\theta)|) + \beta_0 \frac{v_{k-1}}{|v_{k-1}|} + \beta_1 v_{k-1} + \frac{1}{2} c_d \rho A v_{k-1}{}^2 + F_{Wind} \right) + \lambda_{2.k}$$

Die Korrektur (51) erfolgt nach dem Vergleich der berechneten mit den gemessenen Sensorwerten basierend auf den Kovarianzmatrizen der Rauschvektoren $\underline{\lambda}_k$ bzw. $\underline{\kappa}_k$. Diese Kovarianzmatrizen des Mess- und Prozessrauschens sind Einstellparameter und ihre Wahl ist relevant für die Konvergenz und die Dynamik der Zustandsschätzung.

Zusammenfassend besteht die Idee darin, dass die Zustandsschätzung eine durch alle bekannten Quellen (Motordrehmoment, Gravitationskraft durch Neigung, Reibungswiderstand, Luftwiderstand usw.) verursachte Beschleunigung des Gefährts bestimmt und den verbleibenden Beschleunigungsanteil schätzt, der erforderlich ist, um die gemessene Geschwindigkeit und Beschleunigung zu ergeben. Dieser externe Beschleunigungsanteil ist auf die externe Kraft zurückzuführen und lässt sich aus dem geschätzten Zustand $x_{2.k} = \alpha_{ext,k}$ wie folgt direkt in die geschätzte externe Kraft (54) überführen (53):

$$\hat{F}_{ext} = a_{ext} \cdot \left( m_{tot} + \frac{J_W}{r_W^2} \right)$$

Es sollte deutlich sein, dass auch andere konstruktive Ausführungen des motorisierten Gefährts, andere Modellgleichungen und andere Arten der Zustandsschätzung im Vergleich zur beschriebenen Ausführung möglich sind, ohne den Schutzbereich des Hauptanspruchs zu verlassen.

**Patentansprüche**

1. Kraftschätzungsvorrichtung für ein motorisiertes Gefährt (10), das ein elektrisches Unterstützungs-Drehmoment in Abhängigkeit einer externen Kraft erzeugt, wobei die externe Kraft direkt oder indirekt durch einen Nutzer oder eine Nutzerin erzeugt wird und von außen auf das Gefährt einwirkt, wobei diese externe Kraft modellbasiert quantisiert wird, wobei die Kraftschätzungsvorrichtung folgendes umfasst:

   a. mindestens einen Ausgang zur Vorgabe eines elektrischen Stroms (32) oder einer Spannung an einen Motor (12), der ein elektrisches Drehmoment zur Bewegung des Gefährts ausüben kann
   b. einen Eingang für die Übermittlung der Nickneigung des Gefährts (16)
   c. einen Eingang für die Übermittlung der Motorgeschwindigkeit und/oder Bewegungsgeschwindigkeit (35) und/oder der Vertikalbeschleunigung des Gefährts (36)
   d. eine Berechnungseinheit (15), die die auf das Gefährt von extern einwirkende Kraft schätzt, wobei die Schätzung sich dadurch auszeichnet, dass diese auf Basis eines dynamischen Modells (30) des Gefährts, der Geschwindigkeit und Nickneigung (33) und unter Verwendung einer Zustandsschätzung (40) erfolgt, wobei die Zustandsschätzung in einem ersten Schritt ein Prädiktionsmodell (42) und in einem zweiten Schritt ein Messmodell (46) verwendet, um zunächst die inneren Zustände des Systems auf Basis der Motorvorgaben zu prädizieren (45) und anschließend diese Prädiktion auf Basis der Eingangswerte zu korrigieren (50, 51, 52).

2. Kraftschätzungsvorrichtung für ein motorisiertes Gefährt nach einem der vorherigen Ansprüche, wobei das Gefährt dazu vorgesehen ist, dass die extern einwirkende Kraft schiebend oder ziehend darauf einwirkt.

3. Kraftschätzungsvorrichtung für ein motorisiertes Gefährt nach einem der vorherigen Ansprüche, wobei die Zustandsschätzung durch einen normalen, erweiterten oder unscented Kalman Filter realisiert ist.

4. Kraftschätzungsvorrichtung für ein motorisiertes Gefährt nach einem der vorherigen Ansprüche, wobei die Nickneigung des Gefährts von einem 3D-Beschleunigungssensor und/oder einem 3D-Drehratensensor gemessen und übermittelt wird.

5. Kraftschätzungsvorrichtung für ein motorisiertes Gefährt nach Anspruch 4, wobei bei geringen Horizontalbeschleunigungen die Information des Beschleunigungssensors stärker gewichtet wird und bei hohen Horizontalbeschleunigungen die Information des Drehratensensors stärker gewichtet wird.

6. Kraftschätzungsvorrichtung für ein motorisiertes Gefährt nach einem der vorherigen Ansprüche, wobei die Fahrzeuggeschwindigkeit auf Basis der Hall-Sensorik des Motors unter Berücksichtigung der Getriebeübersetzung oder durch Hall-Sensoren, die direkt am Rad des Gefährts oder eines an das Gefährt gekoppelten weiteren Gefährt angebracht sind, gemessen und übermittelt wird.

7. Kraftschätzungsvorrichtung für ein motorisiertes Gefährt nach einem der vorherigen Ansprüche, wobei die Vertikalbeschleunigung entweder durch einen Beschleunigungssensor oder durch die Differentiation des Geschwindigkeitssignals gemessen und übermittelt wird.

8. Kraftschätzungsvorrichtung für ein motorisiertes Gefährt nach einem der vorherigen Ansprüche, wobei die Berechnungseinheit die externe Kraft unter Berücksichtigung der Gesamtmasse (Fahrzeugmasse und Ladungsmasse) des Gefährts bestimmt, wobei die Gesamtmasse mittels einer Eingabeinformation und/oder durch einen vorgegebenen konstanten Wert definiert ist und/oder durch einen Gewichtssensor, welcher in der Radaufhängung oder an der Federung des Gefährts angebracht ist, gemessen wird und/oder während der Fahrt mithilfe einer online Parameteridentifkation bestimmt wird, die die Masse so wählt, dass der Fehler des Prädiktionsmodellausgangs (45) und des gemessenen Sensorwerte (37) minimiert wird.

9. Kraftschätzungsvorrichtung für ein motorisiertes Gefährt nach einem der vorherigen Ansprüche, wobei die Berechnungseinheit die externe Kraft unter Berücksichtigung des Luftwiderstands abschätzt, wobei der Luftwiderstand aus der gemessenen Geschwindigkeit des Gefährts und/oder dem geschätzten oder mittels eines Windsensors gemessenen Windwiderstandes (34) resultiert.

10. Kraftschätzungsvorrichtung für ein motorisiertes Gefährt nach einem der vorherigen Ansprüche, wobei bei schiebend angetriebenen Gefährten detektiert wird, ob das Gefährt parallel zur Straße ausgerichtet ist oder ob es durch äußere Einwirkung gekippt wird.

11. Kraftschätzungsvorrichtung für ein motorisiertes Gefährt nach Anspruch 10, wobei die Kipp-Detektion über Berührungssensoren im Handgriff (14) des Gefährts erfolgt und/oder durch die Auswertung der Drehraten-, Beschleunigungs- und Geschwindigkeitssensorik erfolgt.

Fig. 1

Fig. 2

Europäisches
Patentamt

European
Patent Office

Office européen
des brevets

## EUROPÄISCHER RECHERCHENBERICHT

Nummer der Anmeldung

EP 25 17 0239

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | US 2023/079320 A1 (TSUKAMOTO KENJI [JP]) 16. März 2023 (2023-03-16) | 1,4-9 | INV. B62J45/411 |
| A | * Absätze [0031], [0078], [0083], [0087], [0087], [0097], [0102]; Abbildungen 3,4,8 * ----- | 2,3,10, 11 | B60L50/20 B62K27/00 B62M6/50 |
| A | EP 3 782 895 B1 (AMPRIO GMBH [DE]) 8. Juni 2022 (2022-06-08) * Absätze [0015], [0016], [0019], [0022], [0040]; Abbildungen 1,2 * ----- | 1,4,5, 7-9 | |
| A | US 10 625 818 B2 (NIDEC CORP [JP]) 21. April 2020 (2020-04-21) * Spalte 6, Zeilen 33-55; Abbildungen 1-3 * ----- | 1,6 | |
| A | US 8 297 384 B2 (WANGER MARK E [US]; ANDERSON MARK A [US]; EV IP LLC [US]) 30. Oktober 2012 (2012-10-30) * Abbildungen 1-4 * ----- | 1-11 | |
| | | | RECHERCHIERTE SACHGEBIETE (IPC) |
| | | | B62J B60L B62K B62M |

Der vorliegende Recherchenbericht wurde für alle Patentansprüche erstellt

| Recherchenort | Abschlußdatum der Recherche | Prüfer |
|---|---|---|
| Den Haag | 11. August 2025 | Huber, Florian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 25 17 0239

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2025

| Im Recherchenbericht angeführtes Patentdokument | Datum der Veröffentlichung | Mitglied(er) der Patentfamilie | Datum der Veröffentlichung |
|---|---|---|---|
| US 2023079320 A1 | 16-03-2023 | EP 4105112 A1 | 21-12-2022 |
| | | JP 7355915 B2 | 03-10-2023 |
| | | JP WO2021162075 A1 | 19-08-2021 |
| | | US 2023079320 A1 | 16-03-2023 |
| | | WO 2021162075 A1 | 19-08-2021 |
| EP 3782895 B1 | 08-06-2022 | CN 112407134 A | 26-02-2021 |
| | | EP 3782895 A1 | 24-02-2021 |
| US 10625818 B2 | 21-04-2020 | CN 108025796 A | 11-05-2018 |
| | | JP WO2017047333 A1 | 05-07-2018 |
| | | US 2018257740 A1 | 13-09-2018 |
| | | WO 2017047333 A1 | 23-03-2017 |
| US 8297384 B2 | 30-10-2012 | EP 2432672 A2 | 28-03-2012 |
| | | US 2011079453 A1 | 07-04-2011 |
| | | US 2013000439 A1 | 03-01-2013 |
| | | WO 2010135472 A2 | 25-11-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015055673 A1
- US 2006095191 A1
- EP 3782895 B1
- US 10625818 B2
- WO 2021150160 A1
- WO 2017144832 A1
- WO 2017140626 A1
- JP 6324335 B